# EUROPÄISCHE PATENTANMELDUNG

(11) **EP 4 513 725 A1**
(43) Veröffentlichungstag der Anmeldung: **26.02.2025**
(21) Anmeldenummer: 23192471.3
(22) Anmeldetag: 21.08.2023
(51) Int. Cl.: H02K 15/03, H02K 7/18

(54) **HANDHABUNGSVORRICHTUNG ZUR HANDHABUNG VON MAGNETEN FÜR EINEN GENERATOR, VERWENDUNG DER HANDHABUNGSVORRICHTUNG SOWIE VERFAHREN ZUR MONTAGE UND DEMONTAGE EINES MAGNETEN AN EINER UMFANGSFLÄCHE EINES STAHLTRÄGERS FÜR EINEN GENERATOR**

(71) Anmelder: Wobben Properties GmbH, 26607 Aurich (DE)
(72) Erfinder: Seifert, Konrad, 26607 Aurich (DE); Ressel, Dirk, 26607 Aurich (DE); Wildeboer, Ralf, 26607 Aurich (DE)
(74) Vertreter: Eisenführ Speiser

(57) **Zusammenfassung**

Handhabungsvorrichtung (1) zur Handhabung von Magneten (2) für einen Generator, insbesondere für einen Generator für eine Windenergieanlage (100), wobei die Handhabung ein Anbringen der Magnete (2) an einer Umfangsfläche (5) eines Stahlträgers (4) für den Generator und/oder ein Lösen der Magnete (2) von der Umfangsfläche (5) des Stahlträgers (4) für den Generator umfasst, die Handhabungsvorrichtung (1) aufweisend: eine Stützvorrichtung (10), welche ausgebildet ist, die Handhabungsvorrichtung (1) während der Handhabung der Magnete (2) gegenüber dem Stahlträger (4) abzustützen, eine bewegbar an der Stützvorrichtung (10) angeordnete Greifvorrichtung (20) mit einem ersten Greifarm (21) und einem zweiten Greifarm (22), und eine Positioniervorrichtung (30), die ausgebildet ist, die Greifvorrichtung (20) zwischen einer ersten Position und einer von der ersten Position (P1) verschiedenen zweiten Position (P2) zu positionieren, wobei im Betriebszustand der Handhabungsvorrichtung die erste Position einer Position entspricht, bei der die Magneten (2) auf der Umfangsfläche (5) abgelegt und/oder aufgenommen werden, wobei der erste Greifarm (21) und der zweite Greifarm (22) relativ zueinander bewegbar anordenbar sind, wobei der erste Greifarm (21) und der zweite Greifarm (22) zwischen einer Greifstellung (G) zum Greifen des zu montierenden und/oder zu demontierenden Magneten (2) und einer von der Greifstellung (G) verschiedenen Öffnungsstellung (O) zur Aufnahme und/oder Freigabe des zu montierenden und/oder zu demontierenden Magneten (2) anordenbar sind.

## Beschreibung

Die Erfindung betrifft eine Handhabungsvorrichtung zur Handhabung von Magneten für einen Generator. Ferner betrifft die Erfindung eine Verwendung der Handhabungsvorrichtung sowie ein Verfahren zur Montage und Demontage eines Magneten an einer Umfangsfläche eines Stahlträgers für einen Generator.

Die Handhabung von Magneten umfasst sowohl die Montage als auch die Demontage von Magneten. Magnete werden üblicherweise an Umfangsflächen von Generatoren angeordnet. Diese Umfangsflächen können Außen- und/oder Innenumfangsflächen an Generatoren sein. Insbesondere können die Umfangsflächen an und/oder von Stahlträgern von Generatoren ausgebildet sein. Hierbei sind die Magnete üblicherweise an Umfangsflächen von Rotoren oder Statoren des (elektrodynamischen) Generators angeordnet.

Eine effiziente und gleichermaßen schonende sowie positionsgenaue Montage von Magneten an Generatoren bzw. an Umfangsflächen von Generatoren ist herausfordernd. Dies ist im Wesentlichen den Haftkräften der Magnete geschuldet, welche eine präzise und schnelle Montage von Magneten erschweren, ohne die Magnete während der Montage zu beschädigen. Diese Herausforderung ist umso größer, wenn die Montage der Magnete nicht parallel zur Wirkrichtung der Gravitation und/oder an gekrümmten Flächen erfolgt.

Hinzukommt, dass die in Generatoren zu montierenden Magnete Haftkräfte von 500 kg und mehr aufweisen können. Entsprechend ist eine manuelle Montage ohne Hilfsmittel praktisch nicht möglich und selbst mit Hilfsmitteln herausfordernd.

Häufig werden verschiedene Generatortypen, d.h. Generatoren mit unterschiedlichen Größen, Ausgestaltung, Magneten mit unterschiedlichen Haftkräften, in einer Produktionsanlage in (Groß)Serie hergestellt. Mithin stehen Hersteller von Generatoren vor der Herausforderung, die Montage von Magneten an Generatoren unterschiedlicher Typen in effizienter Weise zu gewährleisten, so dass die Magnete unabhängig vom Generatortyp präzise und beschädigungsfrei montiert werden können.

Diese für die Montage von Magneten skizzierten Herausforderungen existieren in ähnlicher Weise bei der Demontage von Magneten von Generatoren.

Der Erfindung liegt daher die Aufgabe zu Grunde, eine verbesserte Lösung bereitzustellen. Insbesondere ist eine Aufgabe der vorliegenden Erfindung, eine Handhabungsvorrichtung zur verbesserten Handhabung von Magneten für Generatoren, ein Verfahren zur verbesserten Montage eines Magneten an einer Umfangsfläche eines Stahlträgers für einen Generator, ein Verfahren zur verbesserten Demontage eines Magneten von einer Umfangsfläche eines Stahlträgers für einen Generator, eine Verwendung einer Handhabungsvorrichtung zur verbesserten Montage eines Magneten an einer Umfangsfläche eines Generators und eine Verwendung einer Handhabungsvorrichtung zur verbesserten Demontage eines Magneten von einer Umfangsfläche eines Generators bereitzustellen. Ferner ist insbesondere eine Aufgabe der vorliegenden Erfindung, eine Handhabungsvorrichtung zur effizienten und gleichermaßen präzisen und beschädigungsfreien Handhabung von Magneten für Generatoren, ein Verfahren zur effizienten und gleichermaßen präzisen und beschädigungsfreien Montage eines Magneten an einer Umfangsfläche eines Stahlträgers für einen Generator, ein Verfahren zur effizienten und gleichermaßen präzisen und beschädigungsfreien Demontage eines Magneten von einer Umfangsfläche eines Stahlträgers für einen Generator, eine Verwendung einer Handhabungsvorrichtung zur effizienten und gleichermaßen präzisen und beschädigungsfreien Montage eines Magneten an einer Umfangsfläche eines Generators und eine Verwendung einer Handhabungsvorrichtung zur effizienten und gleichermaßen präzisen und beschädigungsfreien Demontage eines Magneten von einer Umfangsfläche eines Generators bereitzustellen.

Diese Aufgabe wird gemäße einem ersten Aspekt der Erfindung gelöst durch eine Handhabungsvorrichtung nach Anspruch 1.

Diese Handhabungsvorrichtung ist eine Handhabungsvorrichtung zur Handhabung von Magneten für einen Generator, insbesondere für einen Generator für eine Windenergieanlage. Insofern ist die Handhabungsvorrichtung insbesondere als Hilfswerkzeug zu verstehen, welches die Montage von Magneten an dem Generator und/oder die Demontage von Magneten von dem Generator betrifft bzw. umfasst. Die Handhabung umfasst also ein Anbringen der Magnete an einer Umfangsfläche eines Stahlträgers für den Generator und/oder ein Lösen der Magnete von der Umfangsfläche des Stahlträgers für den Generator. Die Magnete sind insbesondere Permanentmagnete.

Der Generator umfasst einen Rotor und einen Stator, wobei der Rotor gegenüber dem Stator bewegbar ist. Insbesondere ist der Rotor vorliegend gegenüber dem Stator drehbar gelagert. Hierbei ist vorgesehen, dass der Rotor sich um eine Drehachse des Generators dreht. Der Generator kann als Außenläufer oder als Innenläufer ausgebildet sein. Bei einem Außenläufer liegt der Rotor gegenüber dem Stator in Radialrichtung gesehen in Bezug zu der Drehachse weiter außen. Vorzugsweise umschließt bei einem als Außenläufer ausgebildeten Generator der Rotor den Stator zumindest teilweise. Bei einem Innenläufer liegt der Rotor gegenüber dem Stator in Radialrichtung gesehen in Bezug zu der Drehachse weiter innen. Vorzugsweise umschließt bei einem als Innenläufer ausgebildeten Generator der Stator den Rotor zumindest teilweise.

Für den Einsatz bei Windenergieanlagen ist der Rotor des Generators mit einem aerodynamischen Rotor gekoppelt, welcher mehrere Rotorblätter umfasst, welche die kinetische Energie des Windes in Rotationsenergie wandeln. Diese Rotationsenergie wandelt der Generator wiederum in elektrische Energie.

Der Stahlträger umfasst insbesondere einen zylinderförmigen Hohlkörper. Ferner ist es bevorzugt, dass der Stahlträger eine Tragstruktur aufweist, welche den zylinderförmigen Hohlkörper in Bezug zu einer Drehachse des Generators koaxial hält. Vorzugsweise wird der zylinderförmige Hohlkörper durch ein Blechpaket gebildet. Das Blechpaket umfasst mehrere Bleche, welche sich ringförmig oder teilringförmig um die Drehachse des Generators in Umfangsrichtung erstrecken. Üblicherweise bilden mehrere in einer Ebene und in Umfangsrichtung benachbart angeordnete Bleche einen segmentierten Blechring. Ein Blechring kann aber auch durch ein einziges Blech ausgebildet sein. Bei einem Blechpaket bilden üblicherweise mehrere in Axialrichtung gestapelte Blechringe ein Blech pakt.

Der Stahlträger, insbesondere der zylinderförmige Hohlkörper, besonders bevorzugt das Blechpaket, bildet die Umfangsfläche aus. Die Umfangsfläche ist vorzugsweise eine zylinderförmige Mantelfläche. Die Umfangsfläche weist eine Haupterstreckungsrichtung in Umfangsrichtung auf sowie eine Erstreckung in Axialrichtung, bevorzugt parallel zu der Drehachse auf. Die Umfangsfläche ist insbesondere eine Innenumfangsfläche und/oder eine Außenumfangsfläche. Die Innenumfangsfläche ist hierbei der Drehachse des Generators zugewandt und/oder die Außenumfangsfläche ist von der Drehachse des Generators abgewandt. Die Innenumfangfläche liegt in Radialrichtung in Bezug zu der Außenumfangsfläche innen. Der Abstand der Innenumfangsfläche zu der Drehachse des Generators ist hierbei kleiner als der Abstand der Außenumfangsfläche zu der Drehachse des Generators. Es ist in bevorzugter Weise vorgesehen, dass die Innenumfangsfläche und/oder die Außenumfangsfläche koaxial zu der Drehachse des Generators ausgerichtet sind. Vorzugsweise erstreckt sich der zylinderförmige Hohlkörper in Radialrichtung zwischen der Innenumfangsfläche und der in Bezug zu der Innenumfangsfläche außenliegenden Außenumfangsfläche.

Die Umfangsfläche des Stahlträgers, insbesondere die Innenumfangsfläche und/oder eine Außenumfangsfläche, können mehrere Nuten aufweisen. Vorzugsweise sind die Nuten sind in Umfangsrichtung, insbesondere äquidistant, beabstandet angeordnet. Die Nuten weisen eine Haupterstreckungsrichtung in Axialrichtung auf. Die Nuten erstrecken sich in bevorzugter Weise parallel zueinander. Die Nuten sind beispielsweise als Abdeckungsaufnahmenuten ausgebildet, die zur Aufnahme von Magnetabdeckungen vorgesehen sind.

Der Stahlträger kann ein Stahlträger eines Rotors des Generators oder eines Stators des Generators sein. Der Stahlträger eines Rotors ist auch als Rotor-Stahlträger bekannt. Der Stahlträger eines Stators ist auch als Stator-Stahlträger bekannt.

Zur Handhabung der Magnete weist die Handhabungsvorrichtung eine Stützvorrichtung, eine Greifvorrichtung und eine Positioniervorrichtung auf.

Die Stützvorrichtung ist ausgebildet, die Handhabungsvorrichtung während der Handhabung der Magnete gegenüber dem Stahlträger abzustützen. Zur Handhabung der Magnete, d.h. zur Montage der Magnete an dem Stahlträger oder zur Demontage der Magnete von dem Stahlträger, ist die Handhabungsvorrichtung insbesondere derart angeordnet, dass die Stützvorrichtung mit dem Stahlträger, insbesondere dessen Umfangsfläche in Kontakt steht. Vorzugsweise steht die Stützvorrichtung mit dem Stahlträger lösbar in Kontakt. Insbesondere ist vorgesehen, dass die Stützvorrichtung zur Handhabung der Magnete an dem Stahlträger, insbesondere an dessen Umfangsfläche, anliegt. Vorzugsweise ist vorgesehen, dass die Stützvorrichtung zur Handhabung der Magnete zumindest teilweise in eine, zwei oder mehrere Nuten eingreift.

Die Stützvorrichtung weist vorzugsweise einen U-förmigen Querschnitt auf, so dass zwischen den beiden den U-förmigen Querschnitt bildenden Schenkeln die handzuhabenden Magnete in Radialrichtung an die Umfangsfläche des Stahlträgers herangeführt oder entfernt werden können. Insofern sind die beiden Schenkel der Stützvorrichtung vorzugsweise mit einem Abstand zueinander beabstandet, welcher mindestens der Breite der handzuhabenden Magnete entspricht.

Die Schenkel der Stützvorrichtung erstrecken sich in Radialrichtung zwischen einem ersten Stützvorrichtungsende und einem von dem ersten Stützvorrichtungsende verschiedenen zweiten Stützvorrichtungsende. Hierbei ist in bevorzugter Weise vorgesehen, dass das erste Stützvorrichtungsende in bevorzugter Weise stufenförmig ausgebildet. Vorzugsweise weisen beide Schenkel ausgehend von dem ersten Stützvorrichtungsende einen Nuteneingriffsabschnitt auf, welcher im Vergleich zu dem übrigen Abschnitt der Schenkel ein geringere Breite aufweist. Insbesondere ist der Nuteneingriffsabschnitt der Schenkel derart ausgebildet, dass dieser einer Breite der Abdeckungsaufnahmenut entspricht oder kleiner ist als die Breite der Abdeckungsaufnahmenut. Vorzugsweise ist die Breite des Nuteneingriffsabschnitts der Schenkel für eine formschlüssige Passung mit den Abdeckungsaufnahmenuten an der Umfangsfläche des Stahlträgers ausgebildet, so dass die Handhabungsvorrichtung und der Stahlträger zur Handhabung der Magnete in Umfangsrichtung besonders präzise ausgerichtet werden können.

Vorzugsweise weisen die beiden Schenkel an dem stufenförmigen Übergang von dem Nuteneingriffsabschnitt zu dem übrigen Abschnitt der Schenkel eine Stützfläche aus, welche die Handhabungsvorrichtung gegenüber der Umfangsfläche des Stahlträgers in Radialrichtung in einer definierten Position abstützt. Vorzugsweise ist die Stützfläche leicht gekrümmt ausgebildet. Insbesondere ist die Stützfläche konvex oder konkav ausgebildet.

Das zweite Stützvorrichtungsende der beiden Schenkel ist vorzugsweise durch eine Basiseinheit gekoppelt, welche die beiden Schenkel miteinander verbindet.

Dies unterstützt in bevorzugter Weise die Ausrichtung der Handhabungsvorrichtung gegenüber dem Stahlträger und ermöglicht somit eine effiziente und gleichermaßen präzise und beschädigungsfreie Montage sowie Demontage von Magneten.

Zur Handhabung der Magnete ist an der Stützvorrichtung die Greifvorrichtung bewegbar angeordnet. Insofern sind die Greifvorrichtung und die Stützvorrichtung zueinander relativ bewegbar. Die Greifvorrichtung weist einen ersten Greifarm und einen zweiten Greifarm auf. Vorzugsweise sind die Greifarme gegenüber der Stützvorrichtung translatorisch und/oder rotatorisch bewegbar gelagert.

Es ist vorgesehen, dass der erste Greifarm und der zweite Greifarm relativ zueinander bewegbar anordenbar sind, wobei der erste Greifarm und der zweite Greifarm zwischen einer Greifstellung zum Greifen des zu montierenden und/oder zu demontierenden Magneten und einer von der Greifstellung verschiedenen Öffnungsstellung zur Aufnahme und/oder Freigabe des zu montierenden und/oder zu demontierenden Magneten anordenbar sind. Vorzugsweise sind der erste Greifarm und zweite Greifarm hierzu gegenüber der Stützvorrichtung und/oder relativ zueinander schwenkbar und/oder translatorisch verschiebbar gelagert. In bevorzugter Weise ist vorgehen, dass der erste Greifarm und der zweite Greifarm derart an der Stützvorrichtung angeordnet sind, dass diese mit einer Art Zangenbewegung die Magnete zur Handhabung zu greifen (Greifstellung) bzw. freizugeben (Öffnungsstellung).

In der Greifstellung ist es in bevorzugter Weise vorgesehen, dass die Greifvorrichtung, insbesondere der erste und zweite Greifarm, mit dem handzuhabenden Magneten oder den handzuhabenden Magneten lösbar in Kontakt stehen. Insbesondere ist vorgesehen, dass die Greifvorrichtung, insbesondere der erste und zweite Greifarm, kraftschlüssig und/oder formschlüssig mit dem handzuhabenden Magneten oder den handzuhabenden Magneten in Kontakt stehen. Vorzugsweise ist die Greifvorrichtung, insbesondere der erste und zweite Greifarm, derart ausgebildet, dass diese einen Greifkopf ausbilden, welcher in der Greifstellung in seitlich an dem handzuhabenden Magneten oder den handzuhabenden Magneten vorgesehenen Greifnuten greift.

Die Positioniervorrichtung der Handhabungsvorrichtung ist dazu ausgebildet, die Greifvorrichtung zwischen einer ersten Position und einer von der ersten Position verschiedenen zweiten Position zu positionieren, wobei im Betriebszustand der Handhabungsvorrichtung die erste Position einer Position entspricht, bei der die Magneten auf der Umfangsfläche abgelegt und/oder aufgenommen werden.

Diese Handhabungsvorrichtung ermöglicht somit eine effiziente und gleichermaßen präzise und beschädigungsfreie Montage sowie Demontage von Magneten.

In den abhängigen Ansprüchen sind bevorzugte Ausführungsformen und Fortbildungen der Erfindung beschrieben.

Gemäß einer bevorzugten Ausführungsform der Handhabungsvorrichtung ist vorgesehen, dass die Stützvorrichtung und/oder die Greifvorrichtung und/oder die Positioniervorrichtung aus einem nichtmagnetischen Werkstoff bestehen. Nichtmagnetische Werkstoffe sind nach einer bevorzugten Fortbildung beispielsweise ein nichtmagnetischer Stahl, insbesondere ein nichtmagnetischer Edelstahl. Diese bevorzugte Ausführungsform ermöglicht eine nochmals effizientere und gleichermaßen präzisere und beschädigungsfreiere Montage von Magneten an einer Umfangsfläche bzw. Demontage von Magneten von der Umfangsfläche, da keine oder zumindest wesentlich geringere Haftkräfte zwischen dem handzuhabenden Magneten bzw. den handzuhabenden Magneten sowie der die Stützvorrichtung und/oder die Greifvorrichtung und/oder die Positioniervorrichtung der Handhabungsvorrichtung wirken.

Ferner ist gemäß einer bevorzugten Fortbildung vorgesehen, dass der erste und zweite Greifarm zueinander relativ schwenkbar angeordnet sind. In dieser bevorzugten Ausführungsform kann vorgesehen sein, dass beide Greifarme von der Öffnungsstellung zu der Greifstellung aufeinander zu schwenken, insbesondere derart aufeinander zu schwenken, dass der Abstand zwischen dem Greifkopf des ersten Greifarms und dem Greifkopf des zweiten Greifarms ausgehend von der Öffnungsstellung kleiner wird, bis die beiden Greifarme die Greifstellung erreicht haben. Ebenso kann in bevorzugter Weise vorgesehen sein, dass beide Greifarme von der Greifstellung zu der Öffnungsstellung voneinander weg schwenken, insbesondere derart voneinander weg schwenken, dass der Abstand zwischen dem Greifkopf des ersten Greifarms und dem Greifkopf des zweiten Greifarms ausgehend von der Greifstellung größer wird, bis die beiden Greifarme Öffnungsstellung erreicht haben.

Der erste und zweite Greifarm erstrecken sich jeweils in einer Haupterstreckungsrichtung zwischen einem ersten und zweiten Ende mit einer Greifarmlänge, wobei sich ausgehend von dem ersten Ende ein erster Endabschnitt erstreckt und ausgehend von dem zweiten Ende ein zweiter Endabschnitt erstreckt. Der erste Endabschnitt ist insbesondere der Abschnitt des jeweiligen Greifarms, der in der Greifstellung mit dem handzuhabenden Magneten bzw. den handzuhabenden Magneten in Kontakt steht. In bevorzugter Weise ist vorgesehen, dass der erste und zweite Greifarm jeweils zumindest einen Lageranschlusspunkt zur schwenkbaren Lagerung aufweisen. Vorzugsweise ist der Lageranschlusspunkt des jeweiligen Greifarms in der Hälfte, insbesondere dem Drittel, besonders bevorzugt in dem Viertel, vorgesehen, welche sich ausgehend von dem ersten Ende in Richtung des zweiten Endes erstreckt. Insbesondere ist vorgesehen, dass der Abstand des Lageranschlusspunktes zu dem ersten Ende des jeweiligen maximal einer Hälfte, insbesondere einem Drittel, vorzugsweise einem Viertel, der Greifarmlänge des jeweiligen Greifarms.

Vorzugsweise weisen der erste und der zweite Greifarm separate Lageranschlusspunkte auf. Vorzugsweise erstrecken sich die Schwenkachsen, welche durch die Lageranschlusspunkte definiert werden, parallel und/oder koaxial zueinander. Es kann bevorzugt sein, dass der erste und der zweite Greifarm identische Lageranschlusspunkte aufweisen. Insbesondere kann auch bevorzugt sein, dass die Lagerpunkte derart angeordnet sind, dass die durch die Lagerpunkte definierten Schwenkachsen, um die die Greifarme schwenken, koaxial zueinander ausgerichtet sind. Beispielsweise kann eine Lagerung der Greifarme ähnlich zu einer Lagerung der Zangenarme einer Zange vorgesehen sein.

Es ist zu verstehen, dass die Greifvorrichtung eine, zwei, drei oder mehrere erste Greifarme aufweisen kann und/oder eine, zwei, drei oder mehrere zweite Greifarme aufweisen kann. Insbesondere ist es bevorzugt, dass die Greifvorrichtung mindestens ein Greifarmpaar aufweist, wobei ein Greifarmpaar in bevorzugter Weise aus einem ersten Greifarm und einem zweiten Greifarm gebildet wird. Vorzugsweise weist die Greifvorrichtung mehrere Greifarmpaare auf, welche zueinander beabstandet angeordnet sind. Es ist bevorzugt, dass die Schwenkachsen der ersten Greifarme der mehreren Greifarmpaare und/oder der zweiten Greifarme der mehreren Greifarmpaare koaxial zueinander ausgerichtet sind. Es kann auch in bevorzugter Weise vorgesehen sein, dass zumindest eine Schwenkachse eines ersten Greifarms eines Greifarmpaars der mehrere Greifarmpaare gegenüber den Schwenkachsen der ersten Greifarme der anderen Greifarmpaare nicht koaxial ausgerichtet ist. Ebenso kann in bevorzugter Weise vorgesehen sein, dass zumindest eine Schwenkachse eines zweiten Greifarms eines Greifarmpaars der mehrere Greifarmpaare gegenüber den Schwenkachsen der zweiten Greifarme der anderen Greifarmpaare nicht koaxial ausgerichtet ist.

Vorzugsweise ist die Greifarmlänge des ersten Greifarms und des zweiten Greifarms identisch. Insbesondere ist vorgesehen, dass der erste und zweite Greifarm baugleich sind.

Es kann bevorzugt sein, dass die Greifarmlängen des ersten und zweiten Greifarms voneinander abweichen. Insbesondere kann vorgesehen sein, dass die Greifarmlänge des ersten Greifarms größer ist als die Greifarmlänge des zweiten Greifarms.

Insbesondere kann bevorzugt sein, dass die Greifarme von mehreren Greifarmpaaren baugleich ausgebildet sind. Es kann bevorzugt sein, dass die Bauform, insbesondere die Greifarmlänge, des ersten Greifarms eines Greifarmpaars von der Bauform, insbesondere der Greifarmlänge, des ersten Greifarms eines anderen Greifarmpaars abweicht. Ergänzend oder alternativ kann bevorzugt sein, dass die Bauform, insbesondere die Greifarmlänge, des zweiten Greifarms eines Greifarmpaars von der Bauform, insbesondere der Greifarmlänge, des zweiten Greifarms eines anderen Greifarmpaars abweicht.

Weiterhin ist gemäß einer bevorzugten Ausführungsform vorgesehen, dass die Greifvorrichtung eine Basiseinheit aufweist, an der der erste und zweite Greifarm schwenkbar gelagert sind.

An der Basiseinheit können die Lageranschlusspunkte des ersten und zweiten Greifarms zur schwenkbaren Lagerung angeordnet sein. Vorzugsweise sind die Lageranschlusspunkte gelenkig an der Basiseinheit gelagert. Insbesondere ist es vorgesehen, dass der erste und zweite Greifarm beabstandet zueinander an der Basiseinheit gelagert sind. Insbesondere kann es bevorzugt sein, dass der erste und zweite Greifarm über denselben Lageranschlusspunkt an der Basiseinheit schwenkbar gelagert sind. Die Basiseinheit kann derart ausgebildet sein, dass an dieser ein Greifarmpaare oder mehrere Greifarmpaare angeordnet sind, so dass der erste und/oder zweite Greifarm des jeweiligen Greifarmpaars schwenkbar an der Basiseinheit gelagert ist.

In einer fern bevorzugten Fortbildung der Handhabungsvorrichtung ist vorgesehen, dass die Greifvorrichtung an der Stützvorrichtung translatorisch verschiebbar und/oder schwenkbar angeordnet ist.

Insbesondere kann hierzu vorgesehen sein, dass der erste Greifarm und/oder zweite Greifarm und/oder die Basiseinheit an der Stützvorrichtung translatorisch verschiebbar und/oder schwenkbar angeordnet ist. Vorzugsweise ist die Greifvorrichtung hierzu zur Ausführung einer Rotationsbewegung und/oder zur Ausführung einer translatorischen Bewegung an der Stützvorrichtung gelagert. Insbesondere kann hierzu eine Rotationslagerung und/oder eine Linearlagerung, jeweils beispielsweise durch Wälzlager und/oder Gleitlager realisiert, vorgesehen sein. Insbesondere können für die translatorisch verschiebbare und/oder schwenkbare Anordnung Führungsflächen und/oder Führungsgetriebe, insbesondere an der Stützvorrichtung vorgesehen sein.

Gemäß einer bevorzugten Ausführungsform der Handhabungsvorrichtung weist die Positioniervorrichtung eine Antriebseinheit auf, die vorzugsweise ein Linearmotor und/oder ein Spindelantrieb ist. Hierdurch lässt sich die Greifvorrichtung in bevorzugter Weise zwischen einer ersten Position und einer von der ersten Position verschiedenen zweiten Position bewegen. Vorzugsweise wird die Handhabungsvorrichtung zur Montage von Magneten an der Umfangsfläche bereitgestellt, und hierzu die Stützvorrichtung an der Umfangsfläche des Stahlträgers angeordnet. In dieser Anordnung wird die Greifvorrichtung in der zweiten Position bereitgestellt, so dass der zu montierende Magnet bzw. die zu montierenden Magnete beabstandet zu der Umfangsfläche in der Greifstellung durch die Greifvorrichtung gehalten werden. In der ersten Position ist in bevorzugter Weise vorgesehen, dass die zu montierenden Magnete im Vergleich zu der zweiten Position näher an der Umfangsfläche oder insbesondere bevorzugt an der Umfangsfläche anliegen.

Nach einer weiteren bevorzugten Ausführungsform ist vorgesehen, dass die Handhabungsvorrichtung eine Fixiervorrichtung aufweist, welche zum Fixieren des ersten und/oder zweiten Greifarms in der Greifstellung ausgebildet ist. Insbesondere ist vorgesehen, dass die Fixiervorrichtung zum Fixieren des ersten und/oder zweiten Greifarms in der Greifstellung ausgebildet ist. Vorzugsweise wird die Greifvorrichtung von der Öffnungsstellung in die Greifstellung bewegt und anschließend wird die Greifvorrichtung zur Montage der Magnete an der Umfangsfläche bzw. zur Demontage der Magnete von der Umfangsfläche mittels der Fixiervorrichtung in der Greifstellung fixiert, so dass ein öffnen der Greifvorrichtung, d.h. ein Bewegen der Greifarme von der Greifstellung in die Öffnungsstellung unterbunden wird. Sobald die Montage bzw. Demontage abgeschlossen ist und die Greifvorrichtung von der Greifstellung in die Öffnungsstellung bewegt werden soll, wird die Fixierung der beiden Greifarme durch die Fixiervorrichtung aufgehoben.

Weiterhin ist gemäß einer bevorzugten Fortbildung vorgesehen, dass die Handhabungsvorrichtung eine Verstellvorrichtung aufweist, welche zum Verstellen des ersten und/oder zweiten Greifarms zwischen der Greifstellung und der Öffnungsstellung ausgebildet ist. Mittels der Verstellvorrichtung kann die Greifvorrichtung von der Öffnungsstellung in die Greifstellung und/oder von der Greifstellung in die Öffnungsstellung bewegt werden. Vorzugsweise wird die Verstellvorrichtung durch manuelle Betätigung oder durch einen Motor angetrieben. Die Verstellvorrichtung ist insbesondere dazu ausgebildet, die Greifarme mit einer vordefinierten Haltekraft gegen den bzw. die handzuhabenden Magnete zu pressen.

Gemäß einer weiteren bevorzugten Fortbildung ist vorgesehen, dass die Bewegungsbahnen des ersten und zweiten Greifarms zwischen der Greifstellung und Öffnungsstellung von der Bewegungsbahn der Greifvorrichtung gegenüber der Stützvorrichtung zwischen der ersten und zweiten Position verschieden ist. Insbesondere ist es bevorzugt, dass die Bewegungsbahnen des ersten und zweiten Greifarms Kreisbahnen sind. Die Bewegungsbahn, welche die Greifvorrichtung beim Verfahren zwischen der ersten und zweiten Position folgt, ist vorzugsweise eine lineare Bewegungsbahn.

Weiter ist nach einer bevorzugten Ausführungsform der Handhabungsvorrichtung vorgesehen, dass die Greifvorrichtung zum kraft- und/oder formschlüssigen Greifen des Magneten ausgebildet ist.

Gemäß einem zweiten Aspekt der Erfindung wird die Aufgabe durch ein Verfahren nach Anspruchs 12 gelöst. Das Verfahren ist ein Verfahren zur Montage eines Magneten an einer Umfangsfläche eines Stahlträgers für einen Generator, insbesondere für einen Generator für eine Windenergieanlage. Das Verfahren umfasst mehrere Schritte:
- Bereitstellen einer Handhabungsvorrichtung nach einem der vorhergehenden Ansprüche in einer ersten Position,
- Bereitstellen des Magneten,
- Bereitstellen des Strahlträgers mit der Umfangsfläche,
- Anordnen der Stützvorrichtung der Handhabungsvorrichtung an der Umfangsfläche des Statorträgers,
- Anordnen des ersten und zweiten Greifarms in der Öffnungsstellung,
- Einlegen des Magneten in die Greifvorrichtung,
- Anordnung des ersten und zweiten Greifarms in der Greifstellung,
- Bewegen der Greifvorrichtung mittels der Positioniervorrichtung von der ersten Position zu der zweiten Position, so dass vorzugsweise der Magnet an der Umfangsfläche des Stahlträgers anliegt,
- Anordnen des ersten und zweiten Greifarms in der Öffnungsstellung,
- Entfernen der Handhabungsvorrichtung von der Umfangsfläche des Stahlträgers.

Zu den Vorteilen, Ausführungsvarianten und Ausführungsdetails dieses Aspekts der Erfindung und ihrer Fortbildungen wird auch auf die vorangegangene Beschreibung zu den entsprechenden Merkmalen der Handhabungsvorrichtung bzw. der jeweiligen anderen Aspekte verwiesen.

Gemäß einem dritten Aspekt der Erfindung wird die Aufgabe durch ein Verfahren nach Anspruchs 13 gelöst. Das Verfahren ist ein Verfahren zur Demontage eines Magneten von einer Umfangsfläche eines Stahlträgers für einen Generator, insbesondere für einen Generator für eine Windenergieanlage. Das Verfahren umfasst mehrere Schritte:
- Bereitstellen einer Handhabungsvorrichtung nach einem der vorhergehenden Ansprüche in einer zweiten Position,
- Bereitstellen des Strahlträgers mit an der Umfangsfläche angeordnetem Magnet,
- Anordnen der Stützvorrichtung der Handhabungsvorrichtung an der Umfangsfläche des Statorträgers,
- Anordnen des ersten und zweiten Greifarms in der Öffnungsstellung,
- Anordnen des ersten und zweiten Greifarms in der Greifstellung,
- Bewegen der Greifvorrichtung mittels der Positioniervorrichtung von der zweiten Position zu der ersten Position, so dass der Magnet beabstandet zu der Umfangsfläche des Stahlträgers angeordnet ist,
- Anordnen des ersten und zweiten Greifarms in der Öffnungsstellung,
- Entfernen der Handhabungsvorrichtung von der Umfangsfläche des Stahlträgers.

Zu den Vorteilen, Ausführungsvarianten und Ausführungsdetails dieses Aspekts der Erfindung und ihrer Fortbildungen wird auch auf die vorangegangene Beschreibung zu den entsprechenden Merkmalen der Handhabungsvorrichtung bzw. der jeweiligen anderen Aspekte verwiesen.

Gemäß einer bevorzugten Ausführungsform des zweiten Aspekts und/oder dritten Aspekts der Erfindung ist vorgesehen, dass:
- der Schritt des Anordnens der Stützvorrichtung der Handhabungsvorrichtung an der Umfangsfläche des Stahlträgers folgende Schritte umfasst:
   ∘ Ausrichten der Stützvorrichtung parallel zu einer Abdeckungsaufnahmenut an der Umfangsfläche des Stahlträgers, welche zur Aufnahme einer Magnetabdeckung ausgebildet sind, und/oder
   ∘ Einführen und Positionieren der Stützvorrichtung innerhalb der Abdeckungsaufnahmenuten; und/oder
- der Schritt des Anordnens des ersten und zweiten Greifarms in der Öffnungsstellung folgende Schritte umfasst:
   ∘ Lösen einer Fixiervorrichtung, welche den ersten und zweiten Greifarm in der Greifstellung fixiert, und/oder
   ∘ Verfahren des ersten und zweiten Greifarms von der Greifstellung in die Öffnungsstellung mittels der Verstelleinrichtung; und/oder
- der Schritt des Anordnens des ersten und zweiten Greifarms in der Greifstellung folgende Schritte umfasst:
   o Verfahren des ersten und zweiten Greifarms von der Öffnungsstellung in die Greifstellung mittels der Verstelleinrichtung, und/oder
   o Fixieren des ersten und zweiten Greifarms in der Greifstellung mittels der Fixiervorrichtung.

Gemäß einem vierten Aspekt der Erfindung wird die eingangs genannte Aufgabe nach Anspruch 15 durch die Verwendung einer Handhabungsvorrichtung zur Montage von Magneten an einer Umfangsfläche eines Generators, insbesondere eines Generators für eine Windenergieanlage gelöst.

Zu den Vorteilen, Ausführungsvarianten und Ausführungsdetails dieses Aspekts der Erfindung und ihrer Fortbildungen wird auch auf die vorangegangene Beschreibung zu den entsprechenden Merkmalen der Handhabungsvorrichtung bzw. der jeweiligen anderen Aspekte verwiesen.

Gemäß einem fünften Aspekt der Erfindung wird die eingangs genannte Aufgabe nach Anspruch 16 durch eine Verwendung einer Handhabungsvorrichtung zur Demontage von Magneten von einer Umfangsfläche eines Generators, insbesondere eines Generators für eine Windenergieanlage.

Zu den Vorteilen, Ausführungsvarianten und Ausführungsdetails dieses Aspekts der Erfindung und ihrer Fortbildungen wird auch auf die vorangegangene Beschreibung zu den entsprechenden Merkmalen der Handhabungsvorrichtung bzw. der jeweiligen anderen Aspekte verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: schematische Darstellung einer Windenergieanlage;
- Fig. 2: eine schematische Draufsicht auf eine Handhabungsvorrichtung gemäß einer bevorzugten Ausführungsform in einer ersten Position;
- Fig. 3: eine schematische Draufsicht auf die in Figur 1 gezeigte Handhabungsvorrichtung in einer zweiten Position;
- Fig. 4: eine schematische Draufsicht auf einen Ausschnitt der in Figur 2 gezeigten Handhabungsvorrichtung in einer Greifstellung der Greifvorrichtung;
- Fig. 5: eine schematische Draufsicht auf einen Ausschnitt der in Figur 2 gezeigten Handhabungsvorrichtung in einer Öffnungsstellung der Greifvorrichtung;
- Fig. 6: ein schematisches Ablaufdiagramm eines bevorzugten Verfahrens zur Montage eines Magneten an einer Umfangsfläche eines Stahlträgers für einen Generator; und
- Fig. 7: ein schematisches Ablaufdiagramm eines bevorzugten Verfahrens zur Demontage eines Magneten von einer Umfangsfläche eines Stahlträgers für einen Generator.

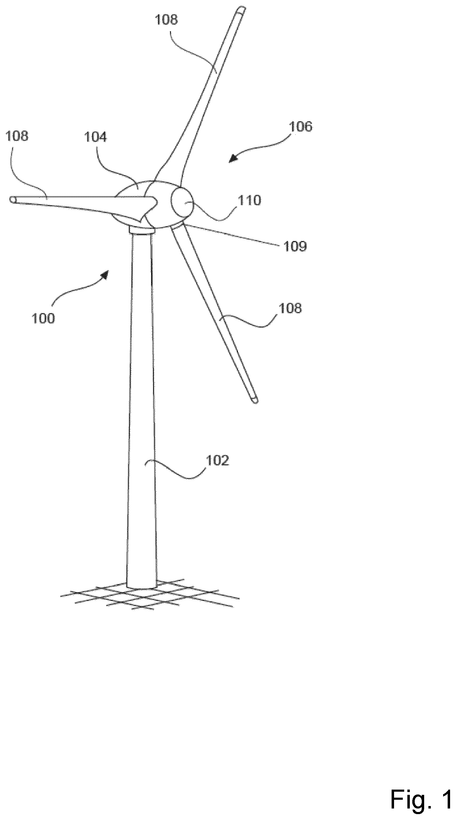

Fig. 1 zeigt eine schematische Darstellung einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators (nicht dargestellt), welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Der Generator dieser Windenergieanlage 100 umfasst einen Rotor und einen Stator, wobei der Rotor gegenüber dem Stator drehbar ist, so dass sich der Rotor, angetrieben durch den aerodynamischen Rotor 106, um eine Drehachse des Generators dreht, um aus der kinetischen Energie des die Windenergieanlage 100 anströmenden Windes bzw. der Rotationsenergie des aerodynamischen Rotor 106 elektrische Energie zu erzeugen. Vorliegend ist der Generator als Außenläufer ausgebildet, so dass der Rotor den Stator im Wesentlichen umschließt und an dem Rotor sind die Magnete angeordnet während an dem Stator die Anordnung der Spulen vorgesehen ist (nicht dargestellt).

In dem vorliegenden Beispiel weist der Rotor einen Stahlträger auf, der eine Umfangsfläche umfasst, an dem die Magnete angeordnet sind. Die Umfangsfläche wird hierbei an einem zylinderförmigen Hohlkörper ausgebildet, den eine Tragstruktur in Bezug zu der Drehachse des Generators koaxial hält. Der zylinderförmige Hohlkörper wird vorliegend durch ein Blechpaket (gestapelte Bleche) gebildet, welches durch Spannschrauben gehalten wird.

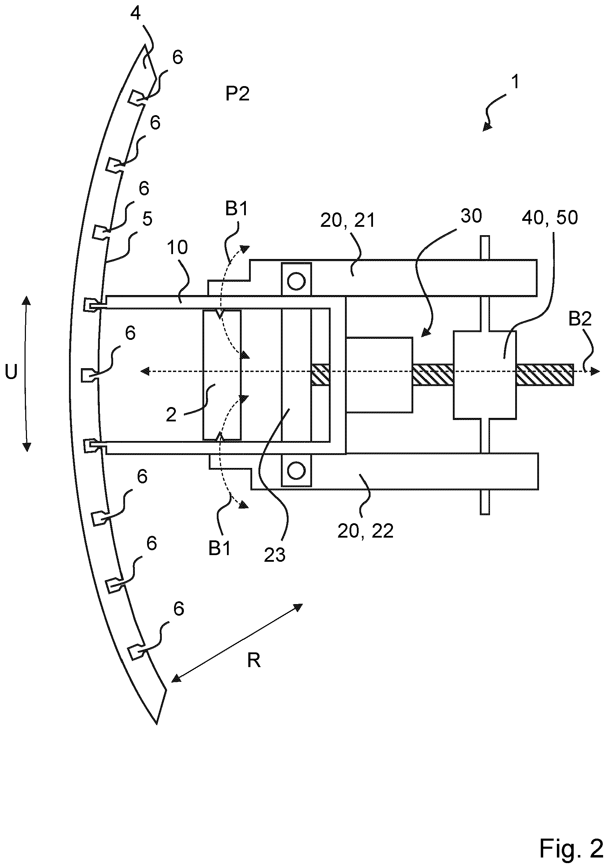

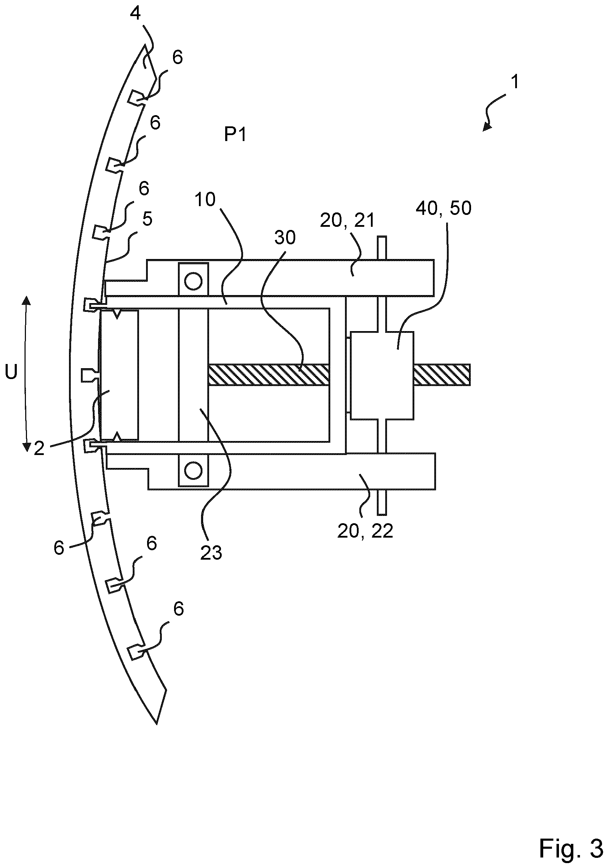

Figuren 2 und 3 zeigen in einer Draufsicht einen Ausschnitt eines Blechpakets des Stahlträgers 4, der sich in Radialrichtung zwischen einer Innenumfangsfläche 5 und einer in Bezug zu der Innenumfangsfläche in Radialrichtung außenliegenden Außenumfangsfläche erstreckt. Es ist zu erkennen, wie sich das ausschnittsweise dargestellte Blechpaket des Stahlträgers 4 in Umfangsrichtung U erstreckt.

Ferner zeigen Figuren 2 und 3 eine schematische Draufsicht auf eine Handhabungsvorrichtung 1 gemäß einer bevorzugten Ausführungsform. Diese Handhabungsvorrichtung 1 ist in dem vorliegenden Ausführungsbeispiel zur Montage von Magneten 2 an bzw. zur Demontage von Magneten von der Innenumfangsfläche 5 des Blechpakets des Stahlträgers 4 vorgesehen. Insofern ist die Handhabungsvorrichtung 1 vorliegend als eine Art Werkzeug zu verstehen, welches einerseits das Anbringen der Magnete an der Umfangsfläche des Stahlträgers für den Generator und andererseits das Lösen der Magnete 2 von der Umfangsfläche 5 des Stahlträgers 4 für den Generator ermöglicht. Danke der Handhabungsvorrichtung 1 ist dies in einer besonders effizienten und gleichermaßen präzisen und beschädigungsfreien Weise realisierbar.

Dies wird durch den erfindungsgemäßen Aufbau der Handhabungsvorrichtung 1 erreicht, welche anhand der in den Figuren 2 und 3 schematisch dargestellten bevorzugten Ausführungsform im Folgenden beschrieben wird.

Im Wesentlichen weist die Handhabungsvorrichtung 1 eine Stützvorrichtung 10, eine Greifvorrichtung 20 und eine Positioniervorrichtung 30 auf.

Zur Montage von Magneten 2 an der Umfangsfläche 5 des Stahlträgers 4 wird die Handhabungsvorrichtung 1 bereitgestellt, so dass die Stützvorrichtung 10 die Handhabungsvorrichtung 1 an der Umfangsfläche 5 des Stahlträgers 4 abgestützt wird. An der Stützvorrichtung 10 ist eine sogenannte Greifvorrichtung 20, welche den Magneten 2 zu Handhabungszwecken greifen kann, bewegbar angeordnet. Diese Greifvorrichtung 20 weist zwei Greifarme, einen ersten Greifarm 21 und einen zweiten Greifarm 22, die relativ schwenkbar zueinander angeordnet sind, wobei die beiden Greifarme in bestimmten Stellungen oder Positionen temporär fixiert werden können (hierzu gleich mehr).

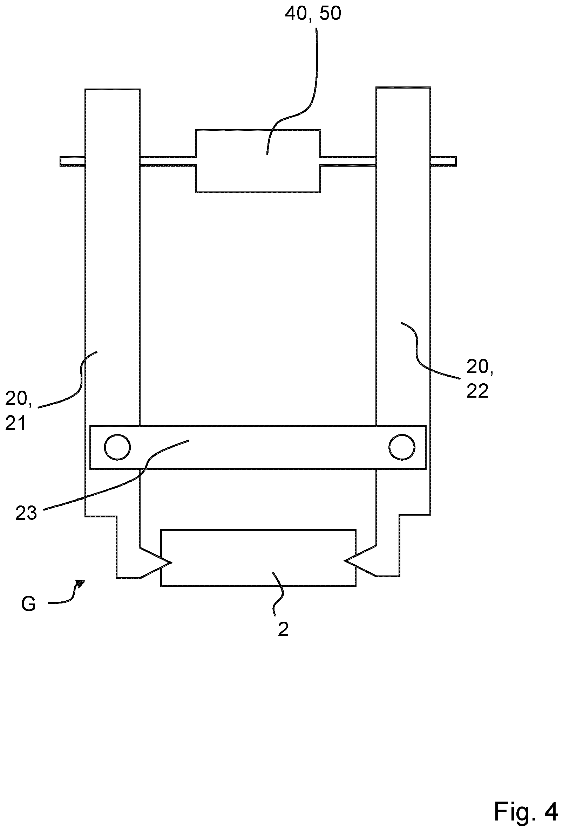

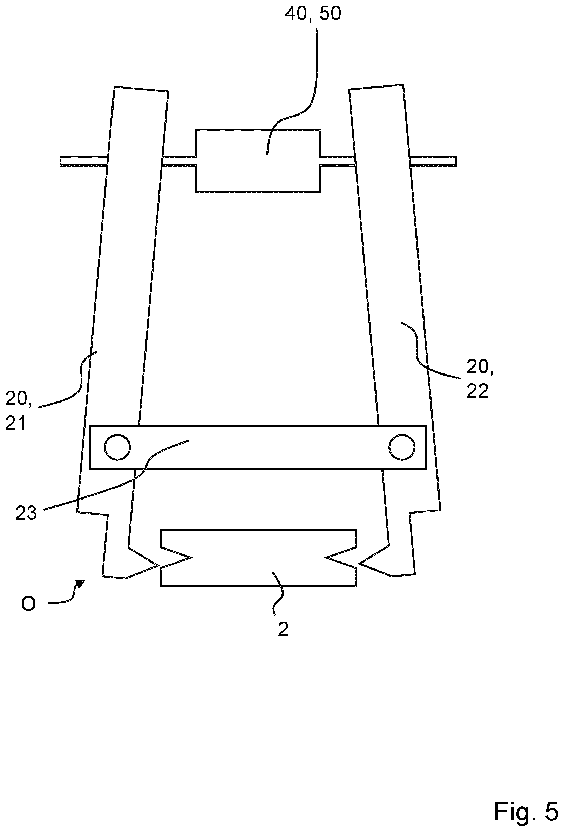

Der erste Greifarm 21 und der zweite Greifarm 22 zwischen einer Greifstellung G zum Greifen des zu montierenden und/oder zu demontierenden Magneten 2 und einer von der Greifstellung G verschiedenen Öffnungsstellung O zur Aufnahme und/oder Freigabe des zu montierenden und/oder zu demontierenden Magneten 2 anordenbar. Figur 4 zeigt die Greifvorrichtung 20 in der Greifstellung G und Figur 5 zeigt die Öffnungsstellung O der Greifvorrichtung 20. Hierzu sind die beiden Greifarme schwenkbar gelagert, wobei die Lagerung der beiden Greifarme über eine Basiseinheit 23 der Greifvorrichtung 20 erfolgt. Das schwenken der beiden Greifarme zwischen der Greifstellung und der Öffnungsstellung erfolgt mittels einer Verstellvorrichtung 50, welche beispielsweise als Spindelbetrieb ausgebildet sein kann. Ferner ist eine Fixiervorrichtung 40 vorgesehen, welche die beiden Greifarme in der Greifstellung fixieren kann, so dass eine sichere Handhabung der Magnete gewährleistet werden kann. In dem vorliegenden Ausführungsbeispiel sind die Verstellvorrichtung 50 und die Fixiervorrichtung 40 in einer Vorrichtung ausgebildet. Die Verstellvorrichtung greift in dem vorliegenden Ausführungsbeispiel angrenzend zu dem zweiten Ende der beiden Greifarme an. Hierdurch können durch den deutlich längeren Hebel zum Lagergelenkpunkt mit einer vergleichsweise geringen Kraft Magnete in der Greifstellung zur Handhandhabung gehalten werden. Die gelenkige Lagerung führt dazu, dass sich die Bewegungsbahn der beiden Greifarme kreisförmig um die Lagergelenkpunkte erstreckt.

Mittels der Positioniervorrichtung 30 kann die Greifvorrichtung 20 in Bezug zu der Stützvorrichtung 10 verfahren werden, nämlich zwischen einer ersten Position P1 und einer zweiten Position P2. Hierbei ist vorgesehen, dass im Betriebszustand der Handhabungsvorrichtung 1, wenn die Handhabungsvorrichtung während der Handhabung von Magneten an dem Stahlträger, insbesondere an der Umfangsfläche 5 des Stahlträgers 4, abgestützt wird, die erste Position P1 der Position entspricht, bei der die Magneten 2 auf der Umfangsfläche 5 abgelegt und/oder aufgenommen werden. Die Handhabungsvorrichtung 1 in der ersten Position P1 ist schematisch in Figur 3 dargestellt. Figur 2 zeigt hingegen die Handhabungsvorrichtung 1 in der zweiten Position P2, bevor die Magnete auf der Umfangsfläche abgelegt werden oder nachdem die Magnete von der Umfangsfläche aufgenommen wurden. Die Positioniervorrichtung weist in dem vorliegenden Ausführungsbeispiel einen Spindelantrieb als Antriebseinheit auf, der mit der Basiseinheit 23 der Greifvorrichtung mechanisch gekoppelt ist. Somit können die beiden Greifarme und insofern die handzuhabenden Magnete zwischen der ersten und zweiten Position P1, P2 mittels der Positioniervorrichtung entlang einer linearen Bewegungsbahn B2 verfahren werden.

Die Stützvorrichtung weist hierzu einen U-förmigen Querschnitt auf, so dass die Magnete zwischen den beiden Schenkeln in Radialrichtung auf die Umfangsfläche aufgelegt werden können oder aber in Radialrichtung von der Umfangsfläche aufgenommen werden können. Der Abstand der beiden Schenkel in Umfangsrichtung U ist hierbei derart gewählt, dass die zu handhabenden Magnete zwischen die beiden Schenkel der Stützvorrichtung geführt werden können. Insofern sind die beiden Schenkel der Stützvorrichtung vorzugsweise mit einem Abstand zueinander beabstandet, welcher mindestens der Breite der handzuhabenden Magnete entspricht.

Die Schenkel der Stützvorrichtung erstrecken sich in Radialrichtung zwischen einem ersten Stützvorrichtungsende und einem von dem ersten Stützvorrichtungsende verschiedenen zweiten Stützvorrichtungsende. Hierbei ist in bevorzugter Weise vorgesehen, dass das erste Stützvorrichtungsende in bevorzugter Weise stufenförmig ausgebildet. Vorzugsweise weisen beide Schenkel ausgehend von dem ersten Stützvorrichtungsende einen Nuteneingriffsabschnitt auf, welcher im Vergleich zu dem übrigen Abschnitt der Schenkel ein geringere Breite aufweist. Insbesondere ist der Nuteneingriffsabschnitt der Schenkel derart ausgebildet, dass dieser einer Breite der Abdeckungsaufnahmenut entspricht oder kleiner ist als die Breite der Abdeckungsaufnahmenut. Vorzugsweise ist die Breite des Nuteneingriffsabschnitts der Schenkel für eine formschlüssige Passung mit den Abdeckungsaufnahmenuten an der Umfangsfläche des Stahlträgers ausgebildet, so dass die Handhabungsvorrichtung und der Stahlträger zur Handhabung der Magnete in Umfangsrichtung besonders präzise ausgerichtet werden können. Es ist zu erkennen, dass die beiden Schenkel an dem stufenförmigen Übergang von dem Nuteneingriffsabschnitt zu dem übrigen Abschnitt der Schenkel eine Stützfläche aufweisen, welche die Handhabungsvorrichtung gegenüber der Umfangsfläche des Stahlträgers in Radialrichtung in einer definierten Position abstützen kann.

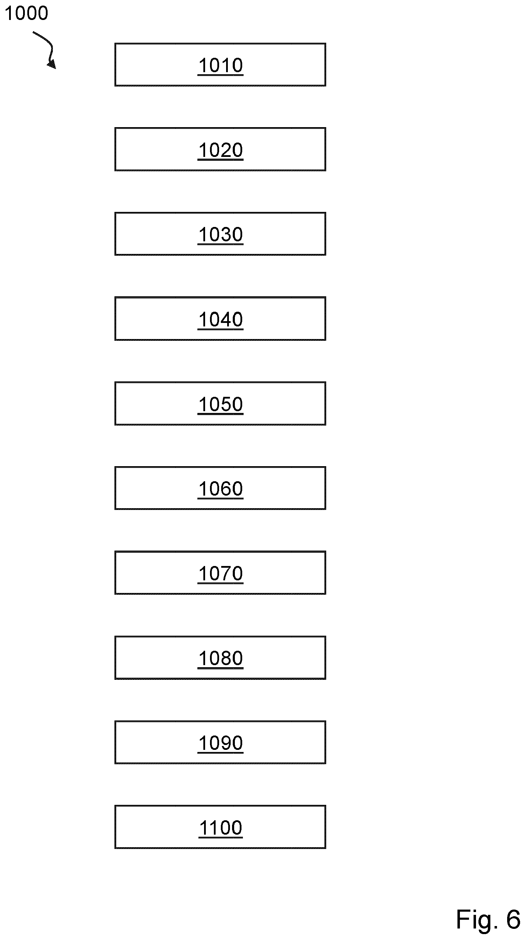

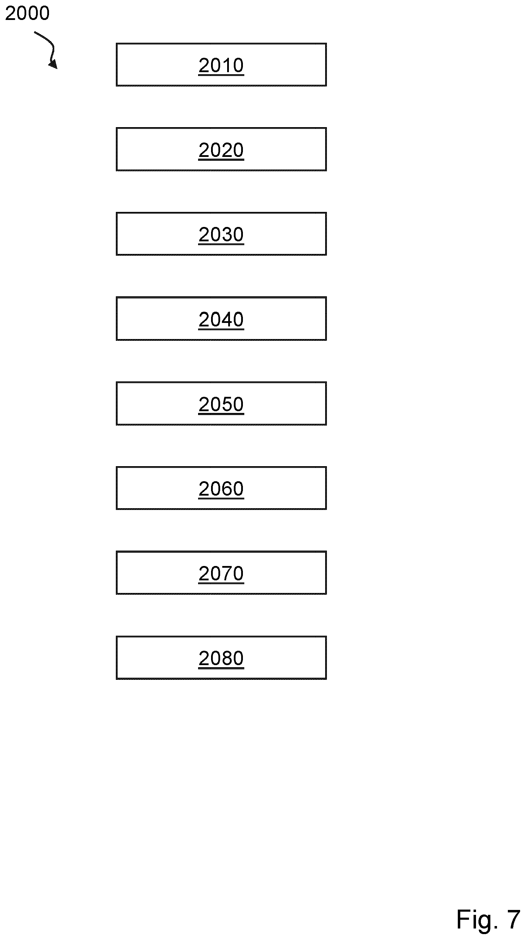

Figuren 6 und 7 zeigen jeweils ein schematisches Ablaufdiagramm von bevorzugten Verfahrens 1000, 2000 zur Handhabung von Magneten 2. Figur 6 zeigt hierbei ein schematisches Ablaufdiagramm einer beispielhaften Ausführungsform eines Verfahren 1000 zur Montage eines Magneten 2 an einer Umfangsfläche 5 eines Stahlträgers 4 für einen Generator. Figur 7 zeigt ein schematisches Ablaufdiagramm eines bevorzugten Verfahrens 2000 zur Demontage eines Magneten 2 von einer Umfangsfläche 5 eines Stahlträgers 4 für einen Generator. Diese Verfahren können mit der in Bezug zu den Figuren 2 bis 5 beschriebenen Handhabungsvorrichtung 1 ausgeführt werden.

Das Verfahren 1000 zur Montage von Magneten 2 an der Umfangsfläche 5 des Stahlträgers 4 für den Generator der Windenergieanlage 100 umfasst mehrere Schritte:
Zunächst sind eine Handhabungsvorrichtung 1, wie diese beispielsweise in Bezug zu den Figuren 2 bis 5 beschrieben wurde, in einer ersten Position bereitzustellen 1010. Ferner sind die zu montierenden Magnete 2 bereitzustellen 1020. Weiterhin ist der Strahlträger 4 mit der Umfangsfläche 5 bereitzustellen 1030. Die Stützvorrichtung 10 der Handhabungsvorrichtung 1 wird dann an der Umfangsfläche 5 des Statorträgers 4 angeordnet 1040 und die ersten und zweiten Greifarmen 21, 22 in der Öffnungsstellung O angeordnet 2050. Anschließend werden die Magnete 2 in die Greifvorrichtung 20 eingelegt 1060 und der erste und zweite Greifarm 21, 22 in der Greifstellung G angeordnet 1070. Nun wird die Greifvorrichtung 20 mittels der Positioniervorrichtung 30 von der ersten Position P1 zu der zweiten Position P2 bewegt 1080, so dass der Magnet 2 an der Umfangsfläche 5 des Stahlträgers 4 anliegt, wobei die Haltekraft des Magneten den Magneten an der Umfangsfläche hält. Der erste und zweite Greifarm 21 , 22 werden nun in der Öffnungsstellung O angeordnet 1090 und die Handhabungsvorrichtung 1 von der Umfangsfläche 5 des Stahlträgers 4 entfernt 1100.

Das Verfahren 2000 zur Demontage von Magneten 2 von der Umfangsfläche 5 des Stahlträgers 4 für den Generator der Windenergieanlage 100 umfasst mehrere Schritte:
Zunächst werden eine Handhabungsvorrichtung 1, wie diese beispielsweise in Bezug zu den Figuren 2 bis 5 beschrieben wurde, in einer zweiten Position P2 bereitgestellt 2010. Ferner wird der Strahlträger mit den an der Umfangsfläche 5 angeordnetem Magneten 2 bereitgestellt 2020. Dann wir die Stützvorrichtung 10 der Handhabungsvorrichtung 1 an der Umfangsfläche 5 des Statorträgers 4 angeordnet 2030, wobei der erste und zweite Greifarm 21, 22 in der Öffnungsstellung O angeordnet werden 2040. Anschließend werden der erste und zweite Greifarm 21, 22 in der Greifstellung G angeordnet 2050, so dass die Greifvorrichtung den zu demontierenden Magneten hält. Mittels der Positioniervorrichtung 30 wird die Greifvorrichtung 20 von der zweiten Position zu der ersten Position bewegt 2060, so dass der Magnet 2 beabstandet zu der Umfangsfläche 5 des Stahlträgers 4 angeordnet ist. Der erste und zweite Greifarm 21, 22 werden nun in der Öffnungsstellung O angeordnet 2070 und die Handhabungsvorrichtung 1 von der Umfangsfläche 5 des Stahlträgers 4 entfernt 2080.

### Bezugszeichenliste

- 1: Handhabungsvorrichtung
- 2: Magnet
- 4: Stahlträger
- 5: Umfangsfläche
- 6: Abdeckungsaufnahmenut
- 10: Stützvorrichtung
- 20: Greifvorrichtung
- 21: erster Greifarm
- 22: zweiter Greifarm
- 30: Positioniervorrichtung
- 40: Fixiervorrichtung
- 50: Verstellvorrichtung
- 100: Windenergieanlage

## Patentansprüche

1. Handhabungsvorrichtung (1) zur Handhabung von Magneten (2) für einen Generator, insbesondere für einen Generator für eine Windenergieanlage (100), wobei die Handhabung ein Anbringen der Magnete (2) an einer Umfangsfläche (5) eines Stahlträgers (4) für den Generator und/oder ein Lösen der Magnete (2) von der Umfangsfläche (5) des Stahlträgers (4) für den Generator umfasst, die Handhabungsvorrichtung (1) aufweisend:
- eine Stützvorrichtung (10), welche ausgebildet ist, die Handhabungsvorrichtung (1) während der Handhabung der Magnete (2) gegenüber dem Stahlträger (4) abzustützen,
- eine bewegbar an der Stützvorrichtung (10) angeordnete Greifvorrichtung (20) mit einem ersten Greifarm (21) und einem zweiten Greifarm (22), und
- eine Positioniervorrichtung (30), die ausgebildet ist, die Greifvorrichtung (20) zwischen einer ersten Position und einer von der ersten Position (P1) verschiedenen zweiten Position (P2) zu positionieren, wobei im Betriebszustand der Handhabungsvorrichtung die erste Position einer Position entspricht, bei der die Magneten (2) auf der Umfangsfläche (5) abgelegt und/oder aufgenommen werden,
- wobei der erste Greifarm (21) und der zweite Greifarm (22) relativ zueinander bewegbar anordenbar sind, wobei der erste Greifarm (21) und der zweite Greifarm (22) zwischen einer Greifstellung (G) zum Greifen des zu montierenden und/oder zu demontierenden Magneten (2) und einer von der Greifstellung (G) verschiedenen Öffnungsstellung (O) zur Aufnahme und/oder Freigabe des zu montierenden und/oder zu demontierenden Magneten (2) anordenbar sind.

2. Handhabungsvorrichtung (1) nach dem vorhergehenden Anspruch, wobei die Stützvorrichtung (10) und/oder die Greifvorrichtung (20) und/oder die Positioniervorrichtung (30) aus einem nichtmagnetischen Werkstoff bestehen.

3. Handhabungsvorrichtung (1) nach dem vorhergehenden Anspruch, wobei der nichtmagnetische Werkstoff ein nichtmagnetischer Stahl, insbesondere ein nichtmagnetischer Edelstahl, ist.

4. Handhabungsvorrichtung (1) nach einem der vorhergehenden Ansprüche, wobei der erste und zweite Greifarm (22) zueinander relativ schwenkbar angeordnet sind.

5. Handhabungsvorrichtung (1) nach einem der vorhergehenden Ansprüche, wobei die Greifvorrichtung (20) eine Basiseinheit (23) aufweist, an der der erste und zweite Greifarm (22) schwenkbar gelagert sind.

6. Handhabungsvorrichtung (1) nach einem der vorhergehenden Ansprüche, wobei die Greifvorrichtung (20) an der Stützvorrichtung (10) translatorisch verschiebbar und/oder schwenkbar angeordnet ist.

7. Handhabungsvorrichtung (1) nach einem der vorhergehenden Ansprüche, wobei die Positioniervorrichtung (30) eine Antriebseinheit aufweist, die vorzugsweise ein Linearmotor und/oder ein Spindelantrieb ist.

8. Handhabungsvorrichtung (1) nach einem der vorhergehenden Ansprüche, aufweisend eine Fixiervorrichtung (40), welche zum Fixieren des ersten und/oder zweiten Greifarms (22) in der Greifstellung ausgebildet ist.

9. Handhabungsvorrichtung (1) nach einem der vorhergehenden Ansprüche, aufweisend eine Verstellvorrichtung (50), welche zum Verstellen des ersten und/oder zweiten Greifarms (22) zwischen der Greifstellung und der Öffnungsstellung ausgebildet ist.

10. Handhabungsvorrichtung (1) nach einem der vorhergehenden Ansprüche, wobei die Bewegungsbahnen (B1) des ersten und zweiten Greifarms zwischen der Greifstellung und Öffnungsstellung von der Bewegungsbahn (B2) der Greifvorrichtung gegenüber der Stützvorrichtung zwischen der ersten und zweiten Position verschieden ist.

11. Handhabungsvorrichtung (1) nach einem der vorhergehenden Ansprüche, wobei die Greifvorrichtung zum kraft- und/oder formschlüssigen Greifen des Magneten ausgebildet ist.

12. Verfahren (1000) zur Montage eines Magneten (2) an einer Umfangsfläche (5) eines Stahlträgers (4) für einen Generator, insbesondere für einen Generator für eine Windenergieanlage, umfassend die Schritte:
- Bereitstellen einer Handhabungsvorrichtung (1) nach einem der vorhergehenden Ansprüche in einer ersten Position,
- Bereitstellen des Magneten,
- Bereitstellen des Strahlträgers mit der Umfangsfläche,
- Anordnen der Stützvorrichtung (10) der Handhabungsvorrichtung (1) an der Umfangsfläche (5) des Statorträgers,
- Anordnen des ersten und zweiten Greifarms (22) in der Öffnungsstellung,
- Einlegen des Magneten (2) in die Greifvorrichtung,
- Anordnung des ersten und zweiten Greifarms (22) in der Greifstellung,
- Bewegen der Greifvorrichtung (20) mittels der Positioniervorrichtung (30) von der ersten Position zu der zweiten Position, so dass vorzugsweise der Magnet an der Umfangsfläche (5) des Stahlträgers (4) anliegt,
- Anordnen des ersten und zweiten Greifarms (22) in der Öffnungsstellung,
- Entfernen der Handhabungsvorrichtung (1) von der Umfangsfläche (5) des Stahlträgers (4).

13. Verfahren (2000) zur Demontage eines Magneten (2) von einer Umfangsfläche (5) eines Stahlträgers (4) für einen Generator, insbesondere für einen Generator für eine Windenergieanlage, umfassend die Schritte:
- Bereitstellen einer Handhabungsvorrichtung (1) nach einem der vorhergehenden Ansprüche in einer zweiten Position,
- Bereitstellen des Strahlträgers mit an der Umfangsfläche (5) angeordnetem Magnet,
- Anordnen der Stützvorrichtung (10) der Handhabungsvorrichtung (1) an der Umfangsfläche (5) des Statorträgers,
- Anordnen des ersten und zweiten Greifarms (22) in der Öffnungsstellung,
- Anordnen des ersten und zweiten Greifarms (22) in der Greifstellung,
- Bewegen der Greifvorrichtung (20) mittels der Positioniervorrichtung (30) von der zweiten Position zu der ersten Position, so dass der Magnet beabstandet zu der Umfangsfläche (5) des Stahlträgers (4) angeordnet ist,
- Anordnen des ersten und zweiten Greifarms (22) in der Öffnungsstellung,
- Entfernen der Handhabungsvorrichtung (1) von der Umfangsfläche (5) des Stahlträgers (4).

14. Verfahren (1000, 2000) nach einem der vorhergehenden Ansprüche, wobei
- der Schritt des Anordnens der Stützvorrichtung (10) der Handhabungsvorrichtung (1) an der Umfangsfläche (5) des Stahlträgers (4) folgende Schritte umfasst:
∘ Ausrichten der Stützvorrichtung (10) parallel zu einer Abdeckungsaufnahmenut (6) an der Umfangsfläche (5) des Stahlträgers (4), welche zur Aufnahme einer Magnetabdeckung ausgebildet sind, und/oder
∘ Einführen und Positionieren der Stützvorrichtung (10) innerhalb der Abdeckungsaufnahmenuten; und/oder
- der Schritt des Anordnens des ersten und zweiten Greifarms (22) in der Öffnungsstellung folgende Schritte umfasst:
∘ Lösen einer Fixiervorrichtung, welche den ersten und zweiten Greifarm (22) in der Greifstellung fixiert, und/oder
∘ Verfahren des ersten und zweiten Greifarms (22) von der Greifstellung in die Öffnungsstellung mittels der Verstelleinrichtung; und/oder
- der Schritt des Anordnens des ersten und zweiten Greifarms (22) in der Greifstellung folgende Schritte umfasst:
∘ Verfahren des ersten und zweiten Greifarms (22) von der Öffnungsstellung in die Greifstellung mittels der Verstelleinrichtung, und/oder
∘ Fixieren des ersten und zweiten Greifarms (22) in der Greifstellung mittels der Fixiervorrichtung.

15. Verwendung einer Handhabungsvorrichtung (1) zur Montage von Magneten (2) an einer Umfangsfläche (5) eines Generators, insbesondere eines Generators für eine Windenergieanlage.

16. Verwendung einer Handhabungsvorrichtung (1) zur Demontage von Magneten (2) von einer Umfangsfläche (5) eines Generators, insbesondere eines Generators für eine Windenergieanlage.
